# EUROPEAN PATENT APPLICATION

(11) **EP 4 610 596 A1**
(43) Date of publication of application: **03.09.2025**
(21) Application number: 24213547.3
(22) Date of filing: 18.11.2024
(51) Int. Cl.: G01C 21/34, G01C 21/36, G08G 1/00

(54) **ROUTE DETERMINATION APPARATUS, ROUTE DETERMINATION METHOD, AND TOWING VEHICLE**

(30) Priority: 19.12.2023 JP 2023214217
(71) Applicant: TOYOTA JIDOSHA KABUSHIKI KAISHA, Toyota-Shi, Aichi-Ken 471-8571 (JP)
(72) Inventor: IWAHORI, Kento, 471-8571 Toyota-shi (JP); YOKOYAMA, Daiki, 471-8571 Toyota-shi (JP)
(74) Representative: J A Kemp LLP

(57) **Abstract**

A route determination apparatus capable of determining a route of a vehicle or a towed vehicle based on whether or not the vehicle is equipped with a power feeding port is provided. A route determination apparatus includes: an acquisition unit configured to acquire information about presence/absence of a power feeding port of a first vehicle (100a) including a power feeding port and that of a second vehicle (100b) including no power feeding port; a route determination unit (233) configured to determine a route along which the first vehicle (100a) or the second vehicle (100b) travels by itself or is towed based on the information; and an instruction unit configured to provide an instruction to the first and second vehicles. The route of the first vehicle includes a power feeding apparatus on the route.

## Description

### BACKGROUND

The present disclosure relates to a route determination apparatus, a route determination method, and a towing vehicle.

Published Japanese Translation of PCT International Publication for Patent Application, No. 2018-508082 discloses a method for guiding a vehicle to a parking lot according to an attribute of the vehicle.

### SUMMARY

However, whether a vehicle is equipped with a power feeding port or not is not included in the attributes of the vehicle.

Therefore, an object of the present disclosure is to provide a route determination apparatus capable of determining a route of a vehicle or a towed vehicle based on whether or not the vehicle is equipped with a power feeding port.

A route determination apparatus according to an aspect of the present disclosure includes:
an acquisition unit configured to acquire information about presence/absence of a power feeding port of a first vehicle including a power feeding port and that of a second vehicle including no power feeding port;
a route determination unit configured to determine a route along which the first vehicle or the second vehicle travels by itself or is towed based on the information; and
an instruction unit configured to provide an instruction to the first and second vehicles.

By the above-described configuration, it is possible to provide a route determination apparatus capable of determining a route of a vehicle or a towed vehicle based on whether or not the vehicle is equipped with a power feeding port.

In the route determination apparatus according to an aspect of the present disclosure, the route of the first vehicle includes a power feeding apparatus on the route.

By the above-described configuration, it is possible to make a vehicle including a power feeding port travel along a route including a power feeding apparatus.

In the route determination apparatus according to an aspect of the present disclosure, the route of the second vehicle includes no power feeding apparatus on the route.

By the above-described configuration, it is possible to make a vehicle including no power feeding port travel along a route including no power feeding apparatus.

The route determination apparatus according to an aspect of the present disclosure includes a transmission unit configured to transmit the determined route to the first vehicle, the second vehicle, a vehicle towing the first vehicle, or a vehicle towing the second vehicle.

By the above-described configuration, it is possible, by transmitting the determined route to the vehicle, to make the vehicle travel along the determined route.

The route determination apparatus according to an aspect of the present disclosure further includes:
a control instruction creation unit configured to create a control instruction value for the first vehicle, the second vehicle, a vehicle towing the first vehicle, or a vehicle towing the second vehicle based on the determined route; and
a transmitting unit configured to transmit the control instruction value to the first vehicle, the second vehicle, the vehicle towing the first vehicle, or the vehicle towing the second vehicle based on the determined route.

By the above-described configuration, it is possible to make a vehicle to which the control instruction value has been transmitted travel along the determined route.

In the route determination apparatus according to an aspect of the present disclosure, the instruction unit instructs the first and second vehicles at a vehicle manufacturing plant or at a port where vehicles are loaded onto a ship.

The above-described example is merely an example of a place where the route determination apparatus according to the present disclosure is applied.

The route determination apparatus according to an aspect of the present disclosure further includes an SOC (State of Charge) information acquisition unit configured to acquire SOC information of the first vehicle, in which
the route determination unit determines a route based on the information and the SOC information.

By the above-described configuration, it is possible to determine a route while taking the SOC of the vehicle into consideration.

In the route determination apparatus according to an aspect of the present disclosure, when the SOC of the first vehicle is equal to or lower than a predetermined value, the route of the first vehicle is a route including a power feeding apparatus thereon.

By the above-described configuration, when the SOC is insufficient, it is possible to make the vehicle travel along a route including a power feeding apparatus.

In the route determination apparatus according to an aspect of the present disclosure, when at least one of a condition that the vehicle is the second vehicle and a condition that the vehicle is the first vehicle of which the SOC is equal to or higher than a predetermined value is satisfied, the route of the first vehicle or the second vehicle is a rout including no power feeding apparatus thereon.

By the above-described configuration, when the SOC is sufficient, it is possible to make the vehicle travel along a route including no power feeding apparatus.

A route determination method according to an aspect of the present disclosure includes:
acquiring information about presence/absence of a power feeding port of a first vehicle including a power feeding port and that of a second vehicle including no power feeding port;
determining a route along which the first vehicle or the second vehicle travels by itself or is towed based on the information; and
providing an instruction to the first and second vehicles.

By the above-described configuration, it is possible to provide a route determination method capable of determining a route of a vehicle or a towed vehicle based on whether or not the vehicle is equipped with a power feeding port.

A vehicle configured to tow a first vehicle according to an aspect of the present disclosure is a vehicle configured to tow the first vehicle along a route determined by the above-described route determination apparatus.

By the above-described configuration, it is possible to provide a vehicle configured to tow a first vehicle along a route determined by a route determination apparatus.

According to the present disclosure, it is possible to provide a route determination apparatus capable of determining a route of a vehicle or a towed vehicle based on whether or not the vehicle is equipped with a power feeding port.

The above and other objects, features and advantages of the present disclosure will become more fully understood from the detailed description given hereinbelow and the accompanying drawings.

### BRIEF DESCRIPTION OF DRAWINGS

Fig. 1 is a schematic diagram showing an overview of a route determination apparatus according to an embodiment;
Fig. 2 is a block diagram showing a configuration of a route determination apparatus according to an embodiment;
Fig. 3 shows flowchart 1 of a route determination method according to an embodiment;
Fig. 4 shows flowchart 2 of a route determination method according to an embodiment;
Fig. 5 is a diagram for explaining control of the traveling of a vehicle;
Fig. 6 is a control block diagram for explaining Travel Control Example 1;
Fig. 7 shows a flowchart for explaining Travel Control Example 1;
Fig. 8 is a control block diagram for explaining Travel Control Example 2; and
Fig. 9 shows a flowchart for explaining Travel Control Example 2.

### DESCRIPTION OF EMBODIMENTS

### Embodiments

Embodiments according to the present disclosure will be described hereinafter with reference to the drawings. However, the invention specified in the claims is not limited to the below-shown embodiments. Further, all the components/structures described in the embodiments are not necessarily indispensable as means for solving the problem. For clarifying the explanation, the following description and drawings are partially omitted and simplified as appropriate. The same reference numerals (or symbols) are assigned to the same elements throughout the drawings and redundant descriptions thereof are omitted as appropriate.

### (Description of Route Determination Apparatus according to Embodiment)

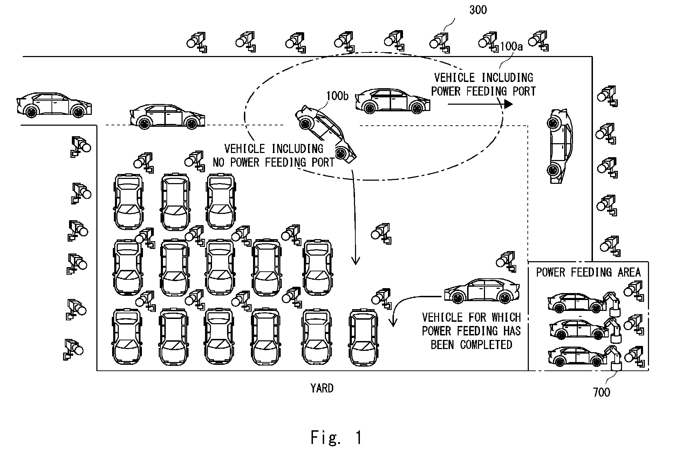

Fig. 1 is a schematic diagram showing an overview of a route determination apparatus according to an embodiment. The route determination apparatus according to the embodiment will be described with reference to Fig. 1.

As shown in Fig. 1, the following situation is assumed. That is, there are vehicles 100a each of which includes a power feeding port and vehicles 100b each of which includes no power feeding port in a mixed manner, and they are driven and transported with no person on board. Such a situation occurs, for example, at a vehicle manufacturing plant or at a port where vehicles are loaded onto a ship.

The vehicles 100a each including a power feeding port are referred to as, for example, first vehicles 100a. The vehicles 100b each including no power feeding port are referred to as, for example, second vehicles 100b. The first and second vehicles 100a and 100b are collectively referred to as vehicles 100.

The first vehicle 100a (e.g., each first vehicle 100a) including a power feeding port includes, for example, a power feeding port. Alternatively, the first vehicle 100a may include a coil for receiving electric power in place of the power feeding port. The first vehicle 100a is an electric vehicle such as a battery-type vehicle or a plug-in hybrid-type vehicle.

The entity which receives electric power is not limited to the first vehicle 100a, but may be a mobile object other than the vehicle. In this embodiment, the mobile object is a first vehicle 100a, and more specifically, is a battery electric vehicle (BEV: Battery Electric Vehicle). Note that the mobile object is not limited to electric vehicles, and may be, for example, an electric motorcycle, an electric bicycle, an electric kickboard, a hybrid vehicle, or a fuel-cell vehicle. Further, the mobile object may be a vehicle including wheels or endless tracks, and may be, for example, a passenger car, a truck, a bus, a two-wheeled vehicle, a four-wheeled vehicle, a tank, a construction vehicle, or other vehicles. Further, the mobile object is not limited to the first vehicle 100a, and may be an electric VTOL (vertical takeoff and landing) vehicle (so-called a flying car).

The second vehicle 100b (e.g., each second vehicle 100b) including no power feeding port is, for example, a vehicle including an engine such as a hybrid vehicle or a gasoline vehicle. The second vehicle 100b including no power feeding port is a vehicle that can operate without receiving electric power from a power feeding apparatus 700.

The power feeding apparatus 700 feeds (i.e., supplies) electric power to the first vehicle 100a. The first vehicle 100a includes a power feeding port having specifications corresponding to the destination, or a power receiving coil for non-contact power feeding. A type of connector included in the power feeding apparatus 700 differs according to the specifications of the power feeding port. The connector has a shape corresponding to the power feeding port. Further, the power feeding apparatus 700 may include a power feeding coil for non-contact power feeding. The power feeding coil for non-contact power feeding is disposed at a position corresponding to the position of the power receiving coil of the vehicle, usually such as under or in contact with the ground.

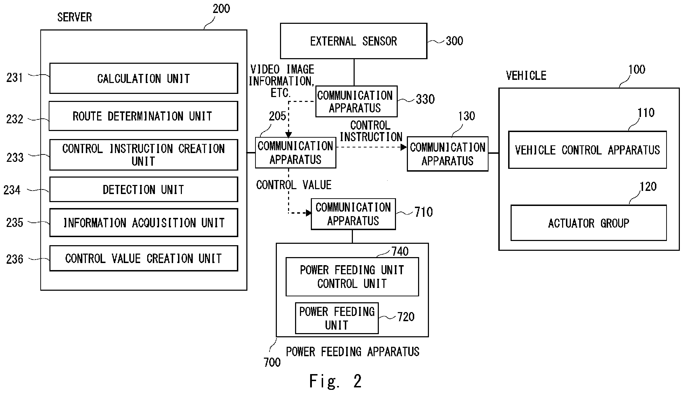

The power feeding apparatus 700 includes a power feeding unit 720 and a power feeding unit control unit 740 (shown in Fig. 2). The power feeding unit 720 is a connector, a power feeding coil, or the like. The power feeding unit control unit 740 supplies a voltage corresponding to the connector to the power feeding unit 720. Further, the power feeding unit control unit 740 controls power feeding created by a control value generation unit of a server 200 to the connector or to the power feeding coil.

The power feeding apparatus 700 connects the connector to the power feeding port. For example, the power feeding apparatus 700 includes an arm mechanism for connecting a connector to a power feeding port. The arm mechanism includes a plurality of joint motors and an end effector for holding a connector. The arm mechanism selects a connector suitable for the power feeding port from among a plurality of connectors and inserts the selected connector into the power feeding port. In this way, the power feeding apparatus 700 can supply a power feeding voltage to the power feeding port. Therefore, the power feeding apparatus 700 can charge a battery of the first vehicle 100a.

An external sensor 300 is any of various sensors, such as an infrastructure camera or LiDAR, installed in a facility such as a factory. Needless to say, two or more external sensors 300 may be installed, and two or more types of sensors may be used in combination. The external sensor 300 is a camera (e.g., a still camera or a video camera) for photographing a vehicle 100 which is moving or at a standstill. The external sensor 300 may be LiDAR. The external sensor 300 transmits its detection result to the server 200. The detection result transmitted from the external sensor 300 may be a photographed image (e.g., a still image or a moving image) or information extracted from such an image. For example, when the external sensor 300 has an image processing function, the external sensor 300 transmits information extracted by performing image processing to the server 200.

The server 200 (shown in Fig. 2) is an information processing apparatus including a memory and a processor, and functions as a route determination apparatus that determines a route. For example, the server 200 receives a detection result obtained by the external sensor 300. The server 200 determines a route according to the detection result or the like.

The server 200 acquires type information about the type of the power feeding port from the external sensor 300 or the first vehicle 100a. Then, the server 200 creates a control value for feeding electric power to the vehicle 100 according to the acquired type information. The type information is information for specifying, for example, a connector or a non-contact power receiving unit corresponding to the power feeding port from among a plurality of connectors or non-contact power feeding units.

Further, in the case of non-contact power feeding, the position of the power receiving coil of the vehicle 100 is aligned with the position of the power feeding coil of the power feeding apparatus 700. Electricity generated by an electromotive force induced by the power feeding coil is transmitted (i.e., supplied) to the power receiving coil, and then fed (i.e., supplied) to the vehicle 100.

As shown in Fig. 1, after leaving a vehicle manufacturing plant, the first vehicle 100a including the power feeding port goes through a route including a power feeding apparatus thereon in order to feed electric power to the first vehicle 100a by the power feeding apparatus. The second vehicle 100b including no power feeding port goes through a route including no power feeding apparatus thereon because there is no need to feed electric power to the second vehicle 100b by the power feeding apparatus. The destination of each of the vehicles 100 is a yard. The yard is a place where a large number of vehicles are stored (e.g., parked) in an orderly manner before they are loaded onto a ship or shipped.

The head of vehicles (hereinafter also referred to as the leading vehicle) may move while towing a plurality of first vehicles 100a or a plurality of second vehicles 100b. Such a traveling operation is called vehicle platooning. Therefore, it is possible to perform vehicle platooning by determining a route for the leading vehicle, i.e., a vehicle towing a plurality of first vehicles 100a or a plurality of second vehicles 100b, and making the remaining vehicles follow the leading vehicle.

In order to make a plurality of first vehicles 100a or second vehicles 100b follow the leading vehicle, the same control instruction value as that for the leading vehicle may be input to the first vehicles 100a or the second vehicles 100b. Further, a photographing apparatus (e.g., a still camera or a video camera) may be provided in each of the first vehicles 100a and the second vehicles 100b, and they may be made to travel based on photographed images. Further, each of the first vehicle 100a and the second vehicles 102b may be made to follow the leading vehicle by using an external sensor(s) 300.

Information about the SOC of the first vehicle 100a may be acquired and a route may be determined based on the information about the SOC. For example, when the SOC of the first vehicle 100a is equal to or lower than a predetermined value, the route of the first vehicle 100a includes a power feeding apparatus thereon.

For example, when the SOC of the first vehicle 100a is equal to or higher than a predetermined value, the route of the first vehicle 100a includes no power feeding apparatus thereon in order to prevent overcharging. That is, when at least one of a condition that the vehicle is the second vehicle and a condition that the vehicle is the first vehicle of which the SOC is equal to or higher than a predetermined value is satisfied, the route of the first vehicle or the second vehicle includes no power feeding apparatus thereon.

The server 200 determines the route of the first vehicle 100a, the second vehicle 100b, a vehicle towing the first vehicle 100a, or a vehicle towing the second vehicle 100b while taking these conditions into consideration. Further, the server 200 includes an instruction unit that instructs the first vehicle 100a and the second vehicle 100b to move according to an instruction.

### (Description of Configuration of Route Determination Apparatus according to Embodiment)

Fig. 2 is a block diagram showing a configuration of a route determination apparatus according to an embodiment. The configuration of the route determination apparatus according to the embodiment will be described with reference to Fig. 2.

The route determination apparatus is, for example, the server 200. The server 200 includes a calculation unit 231, a route determination unit 232, a control instruction creation unit 233, a detection unit 234, an information acquisition unit 235, and a control value creation unit 236. Further, the server 200 includes a communication apparatus 205 that transmits and receives data to and from the first vehicle 100a, the second vehicle 100b, the external sensor 300, the power feeding apparatus 700, and the like. Note that the server 200 is not limited to a single physical apparatus, and may be one that is provided in a distributed manner. For example, its database may be a storage device or a cloud server provided separately from its processor. The route determination apparatus is not limited to the server 200, and an ECU (Electronic Control Unit) installed in the vehicle may function as the server 200.

The external sensor 300 includes a communication apparatus 330 that transmits and receives data to and from the server 200. The communication apparatus 330 transmits an image (e.g., a still image or a moving image) photographed by the external sensor 300 to the server 200. The communication apparatus 330 may transmit not only the photographed image but also information obtained from the photographed image to the server 200. That is, the communication apparatus 330 transmits a detection result detected by the external sensor 300. Note that the communication apparatus 330 may be incorporated into the external sensor 300 or may be provided as a separate apparatus. Further, one communication apparatus 330 may be used by a plurality of external sensors 300. That is, in the case where a plurality of external sensors 300 are installed, one communication apparatus 330 may transmit their data to the server 200.

The calculation unit 231 calculates position information indicating the position and orientation of the vehicle based on the photographed image. For example, the calculation unit 231 can calculate the coordinates of the vehicle in the XYZ global coordinate system and the azimuth thereof in the factory map. At least a part of the processing performed by the calculation unit 231 may be performed in the external sensor 300. For example, the external sensor 300 may include a processor that performs image processing. In this case, position information indicating the position or the like of the vehicle 100 is transmitted from the communication apparatus 330 to the communication apparatus 205.

The position and orientation of the vehicle 100 may be estimated by using a photographed image acquired by the external sensor 300 provided at a place different from that of the vehicle 100. Regarding the position of the vehicle 100, it is possible to acquire it, for example, by calculating the coordinates of the positioning point of the mobile object in the image coordinate system by using the external shape of the vehicle 100 detected from the photographed image, and converting the calculated coordinates into coordinates in the global coordinate system. Regarding the orientation of the vehicle 100, it is possible to estimate it, for example, based on the orientation of the moving vector of the mobile object calculated from changes in the positions of the feature points of the mobile object between frames of the photographed images by using an optical flow method. The orientation of the vehicle 100 may be calculated by using, for example, output results of a speed sensor, a yaw rate sensor, or the like installed in the vehicle 100.

It is possible to detect the external shape of the vehicle 100 included (i.e., shown) in the photographed image by, for example, inputting the photographed image into a detection model using artificial intelligence. Examples of detection models include a trained machine-learning model that has been trained to perform either semantic segmentation or instance segmentation. As this machine-learning model, for example, a convolutional neural network (hereinafter also referred to as a CNN) trained through supervised learning using a learning data set can be used. The learning data set includes, for example, a plurality of training images each including a mobile object and correct labels each indicating whether a respective area in the training image is an area indicating a mobile object or an area that does not indicate a mobile object. When the CNN is trained, it is preferred that parameters of the CNN are updated by backpropagation (error back-propagation method) so that errors between output results by the detection model and correct labels are reduced.

The route determination unit 232 determines the route of each of the first vehicle 100a, the second vehicle 100b, the vehicle towing the first vehicle, and the vehicle towing the second vehicle based on whether or not the vehicle is equipped with a power feeding port. The whether the vehicle is equipped with a power feeding port or not can be determined based on whether or not there is a reply when diagnostic communication is performed. This is because when the vehicle is equipped with a power feeding port, there is a reply to inquiry from the server 200 because its data ID is recorded in the ECU. When the vehicle is not equipped with a power feeding port, there is no reply because there is no data ID in ECU. Since this data ID is expressed by a signal having a format of eight bits, it is possible to also acquire information about which of the left and right sides of the vehicle the power feeding port is disposed at the same time.

In the case of the first vehicle 100a including a power feeding port or the vehicle towing the first vehicle 100a including a power feeding port, a route including a power feeding apparatus thereon is selected. In the case of the second vehicle 100b including no power feeding port or the vehicle towing the second vehicle 100b including no power feeding port, a route including no power feeding apparatus thereon is selected.

The route determination unit 232 may determine the route of the first vehicle 100a based on the state of the SOC thereof. When the SOC is equal to lower than a predetermined value, a route including a power feeding apparatus is selected because it is necessary to charge the vehicle (e.g., the battery of the vehicle). When the SOC is equal to or higher than a predetermined value, a route including no power feeding apparatus is selected because there is no need to charge the vehicle.

The control instruction creation unit 233 creates, for example, a control instruction for controlling the first vehicle 100a or the vehicle towing the first vehicle 100a. Specifically, the control instruction creation unit 233 creates a control instruction for moving the first vehicle 100a to a power feeding place. The control instruction may be information indicating a speed, an acceleration, a steering angle, or the like of the first vehicle 100a or the vehicle towing the first vehicle 100a. Further, when the first vehicle 100a or the vehicle towing the first vehicle 100a can autonomously move, the control instruction may be a route from the current place of the vehicle to a power feeding place on a map or a route determined by the route determination unit 232. As described above, the control instruction creation unit 233 creates a control instruction for the movement of the first vehicle 100a.

The control instruction creation unit 233 creates, for example, a control instruction for controlling the second vehicle 100b or the vehicle towing the second vehicle 100b. Specifically, the control instruction creation unit 233 may create a control instruction for conveying the second vehicle 100b to the yard. The control instruction may be information indicating a speed, an acceleration, a steering angle, or the like of the second vehicle 100b or the vehicle towing the second vehicle 100b. Further, when the second vehicle 100b or the vehicle towing the second vehicle 100b can autonomously move, the control instruction may be a route from the current place of the vehicle to a power feeding place on a map or a route determined by the route determination unit 232. As described above, the control instruction creation unit 233 creates a control instruction for the movement of the second vehicle 100b.

The communication apparatus 205 includes a transmitting unit that transmits the control instruction to the vehicle 100. When a communication apparatus 130 of the vehicle 100 receives the control instruction, the vehicle 100 moves according to the received control instruction. The vehicle 100 includes an actuator group 120 and a vehicle control unit 115. The actuator group 120 includes wheel motors for driving wheels, a steering motor for controlling the steering angle, a brake for stopping the vehicle, and the like. The vehicle control unit 115 generates a control signal for controlling the actuator group 120 according to the control instruction. The vehicle control unit 115 may be formed by the ECU.

The detection unit 234 detects that the vehicle 100 has stopped at a power feeding place. For example, when the vehicle 100 is equipped with an external sensor 300 that photographs a power feeding place, the detection unit 234 detects that the vehicle 100 has stopped at the power feeding place based on an image obtained by the external sensor 300. Alternatively, a signal indicating that the vehicle 100 has stopped at a power feeding place may be transmitted. Further, the vehicle 100 may transmit identification information unique to the vehicle.

The information acquisition unit 235 acquires type information as to whether the vehicle 100 is equipped with a power feeding port or not. For example, the type information is information about the destination of the vehicle 100. The information acquisition unit 235 may acquire type information from an image obtained by the external sensor 300. The information acquisition unit 235 may acquire type information from the identification information of the vehicle 100 which has stopped at the power feeding place. For example, the information acquisition unit 235 accesses a production management database provided in a factory and thereby acquires production management information. For each vehicle, the destination of the vehicle is registered in its production management information, so that the information acquisition unit 235 can read the destination from the identification information or the like of the vehicle 100.

Further, in the case where power feeding information related to a target SOC (State of Charge) or the like is set when the vehicle is shipped, the information acquisition unit 235 reads the power feeding information from the database. The information acquisition unit 235 also serves as an SOC information acquisition unit. For example, when the target SOC at the time of shipment is set according to the destination, electric power is fed (i.e., supplied) to the vehicle so that the target SOC is attained. Only the lower limit value may be set, or a range of which the upper and lower limit values are set may be used. Further, the power feeding apparatus 700 may not only supply electric power so as to attain the target SOC, but may also consume electric power when the actual SOC of the vehicle is higher than the target SOC thereof. When the SOC is too high in the transportation process to the destination, the battery may deteriorate, whereas when the SOC is too low, the battery may run out of electric power. Therefore, the vehicle may be shipped after the SOC is adjusted into a predetermined range.

The control value creation unit 236 creates a control value based on the type information. For example, the control value is data for specifying a connector corresponding to the destination. When the information about the destination contained in the type information indicates that the vehicle is for Japan, the control value is data for selecting a connector. Specifically, the control value may be data indicating a connector number or data indicating the position of a connector.

The communication apparatus 205 transmits the control value to the power feeding apparatus 700. When a communication apparatus 710 of the power feeding apparatus 700 receives the control value, the power feeding apparatus 700 performs a power feeding operation. Specifically, the power feeding apparatus 700 includes an arm control unit. The arm control unit controls an arm mechanism so that the arm mechanism holds the connector specified by the control value. Then, the arm control unit controls the arm mechanism so that the connector is connected to the power feeding port.

As described above, the control value creation unit 236 creates a control value according to the type information indicating the type of the power feeding port. Therefore, the power feeding apparatus 700 can feed electric power to the first vehicle 100a by using (i.e., through) the connector conforming to the power feeding port.

Note that communication among the communication apparatus 205, the communication apparatus 330, the communication apparatus 710, and the communication apparatus 130 may be wireless communication or wired communication. Note that at least a part of the function of each block provided in the server 200 may be implemented in the vehicle 100, the external sensor 300, or the power feeding apparatus 700. The communication apparatus 205, the communication apparatus 330, the communication apparatus 710, and the communication apparatus 130 may have only one of a transmitting function and a receiving function.

### (Description of Route Determination Method and Operation of Power Feeding Apparatus according to Embodiment)

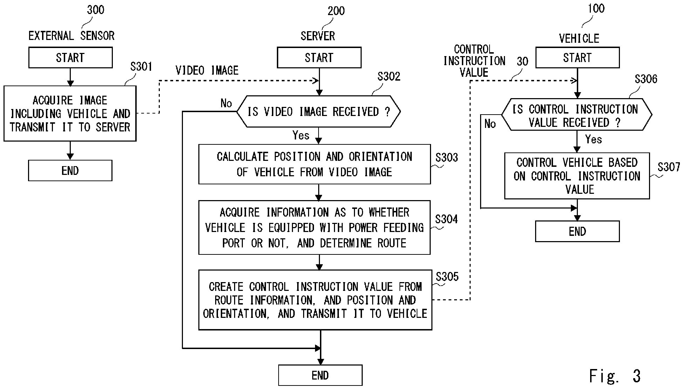

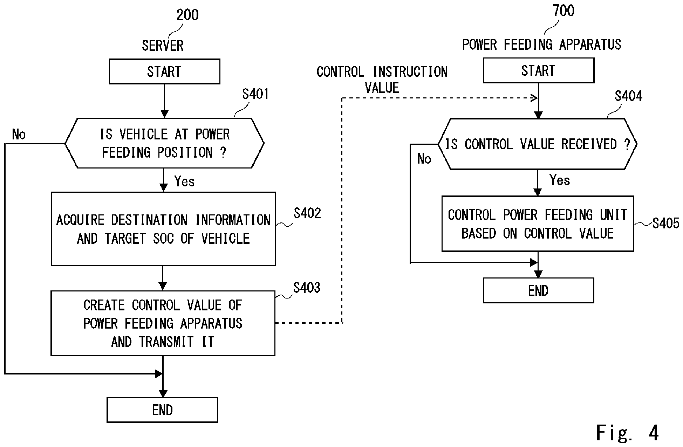

Fig. 3 shows flowchart 1 of a route determination method according to an embodiment. Fig. 4 shows flowchart 2 of a route determination method according to an embodiment. A route determination method and operations performed by a power feeding apparatus will be described hereinafter with reference to Figs. 3 and 4. As shown in Fig. 3, when the external sensor 300 takes an image of a vehicle 100, it transmits the image to the server 200 (S301). The server 200 determines whether or not it has received the image (S302). When the server 200 has not received the image (No in S302), it finishes the process without performing any other process. That is, the server 200 waits until it receives the image from the external sensor 300.

When the server 200 receives the image from the external sensor 300 (Yes in S302), the calculation unit 231 calculates the position and orientation of the vehicle 100 from the image (S303). Then, the route determination unit 232 acquires information as to whether or not the vehicle is equipped with a power feeding port, and determines the route of the vehicle (S304). The control instruction creation unit 233 creates a control instruction based on the route information, and the position and orientation of the vehicle 100, and the communication apparatus 205 transmits the created control instruction to the vehicle 100 (S305).

The vehicle 100 determines whether or not it has received the control instruction value from the server 200 (S306). When the vehicle 100 has not received the control instruction value (No in S306), it finishes the process. That is, the vehicle 100 waits until it receives the control instruction value. When the vehicle 100 has received the control instruction value (Yes in S306), the vehicle is controlled based on the control instruction value (S307). That is, the vehicle control unit 115 controls the actuator group 120 such as vehicle motors, a steering motor, and a brake. As a result, the vehicle 100 moves to a power feeding place.

Next, as shown in Fig. 4, the detection unit 234 determines whether or not the vehicle 100 is at the power feeding place (S401). For example, the detection unit 234 determines whether or not the vehicle 100 is at the power feeding place based on an image obtained by an external sensor 300 located near the power feeding place. When the vehicle 100 is not at the power feeding place (No in S401), it finishes the process. That is, the server 200 waits until the vehicle 100 moves to the power feeding place.

When the vehicle 100 is at the power feeding place (Yes in S401), the information acquisition unit 235 acquires information about the vehicle 100 (S402). When the detection unit 234 detects the vehicle 100 located at the power feeding place, the information acquisition unit 235 acquires the type information of the vehicle 100. For example, the vehicle 100 located at the power feeding place may transmit identification information unique thereto to the server 200. The server 200 refers to a database and specifies the destination of the vehicle based on the identification information. In this way, the information acquisition unit 235 can acquire type information corresponding to the destination. Alternatively, the information acquisition unit 235 may acquire type information from an image or the like obtained by an external sensor 300. Further, the information acquisition unit 235 may acquire power feeding information such as SOC.

Then, the control value creation unit 236 creates a control value of the power feeding apparatus 700 based on the type information, and the communication apparatus 205 transmits the created control value to the power feeding apparatus 700 (S403). The control value may be information indicating a connector or the like. Alternatively, the control value may be a motor driving amount or the like related to the operation for holding the connector and inserting it into the power feeding port. For example, the control value may be information about the position of the power feeding port and/or the position of the connector. Further, the control value may be a value related to the position at which the connecter is inserted and/or the direction in which the connector is inserted.

The power feeding apparatus 700 determines whether or not it has received the control value (S404). When the power feeding apparatus 700 has not received the control value (No in S404), it finishes the process. That is, the power feeding apparatus 700 waits until it receives the control value. When the power feeding apparatus 700 has received the control value (Yes in S404), a power feeding unit of the power feeding apparatus 700 is controlled based on the received control value (S405). For example, an arm mechanism is driven so that an arm control unit holds a connector conforming to the type information.

### <A. Traveling Control Example 1>

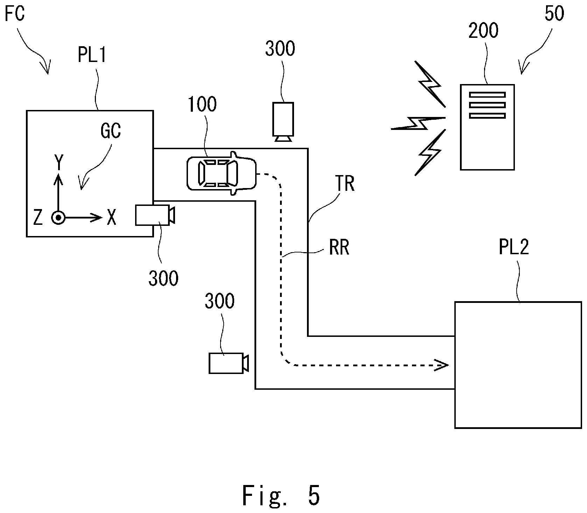

Fig. 5 is a conceptual diagram showing a configuration of a system 50 in Traveling Control Example 1. The system 50 includes at least one vehicle 100 as a mobile object, a server 200, and at least one external sensor 300.

Note that when the mobile object is an object other than the vehicle, each of the terms "vehicle" and "car" in the present disclosure can be replaced with a "mobile object" as appropriate, and the term "traveling" can be replaced with a "movement" as appropriate.

The vehicle 100 is configured to be able to travel by an unattended operation. The "unattended operation" means an operation (e.g., driving) that does not rely on a traveling operation performed by an occupant (e.g., a driver). The traveling operation means an operation related to at least one of "running", "turning", and "stopping" of the vehicle 100. The unattended operation is carried out by automatic or manual remote control using an apparatus located outside the vehicle 100, or by autonomous control of the vehicle 100. An occupant (e.g., a driver or a passenger) who does not perform a traveling operation may be on board the vehicle 100 which is traveling by an unattended operation. Examples of occupants who do not perform a traveling operation includes a person simply sitting on a seat of the vehicle 100 and a person who performs an operation other than the traveling operation, such as assembling, inspecting, and operating switches while being on board the vehicle 100. Note that the operation (e.g., driving) by a traveling operation performed by an occupant may be referred to as a "manned operation (or piloted operation)".

In this specification, the "remote control" includes "full remote control" in which all the operations of the vehicle 100 are completely determined from the outside of the vehicle 100, and "partial remote control" in which some of the operations of the vehicle 100 are determined from the outside of the vehicle 100. Further, the "autonomous control" includes "full autonomous control" in which the vehicle 100 autonomously controls its own operations without receiving any information from an apparatus located outside the vehicle 100, and "partial autonomous control" in which the vehicle 100 autonomously controls its own operations by using information received from an apparatus located outside the vehicle 100.

In this embodiment, the system 50 is used in a factory FC in which vehicles 100 are manufactured. The reference coordinate system of the factory FC is a global coordinate system GC. That is, any position in the factory FC is represented by X, Y and Z-coordinates in the global coordinate system GC. The factory FC includes a first place PL1 and a second place PL2. The first and second places PL1 and PL2 are connected to each other by a track TR (e.g., passageway) on which a vehicle 100 can travel. The factory FC includes a plurality of external sensors 300 along the track TR. The positions of the external sensors 300 in the factory FC are adjusted in advance. The vehicle 100 moves from the first place PL1 to the second place PL2 through the track TR by an unattended operation.

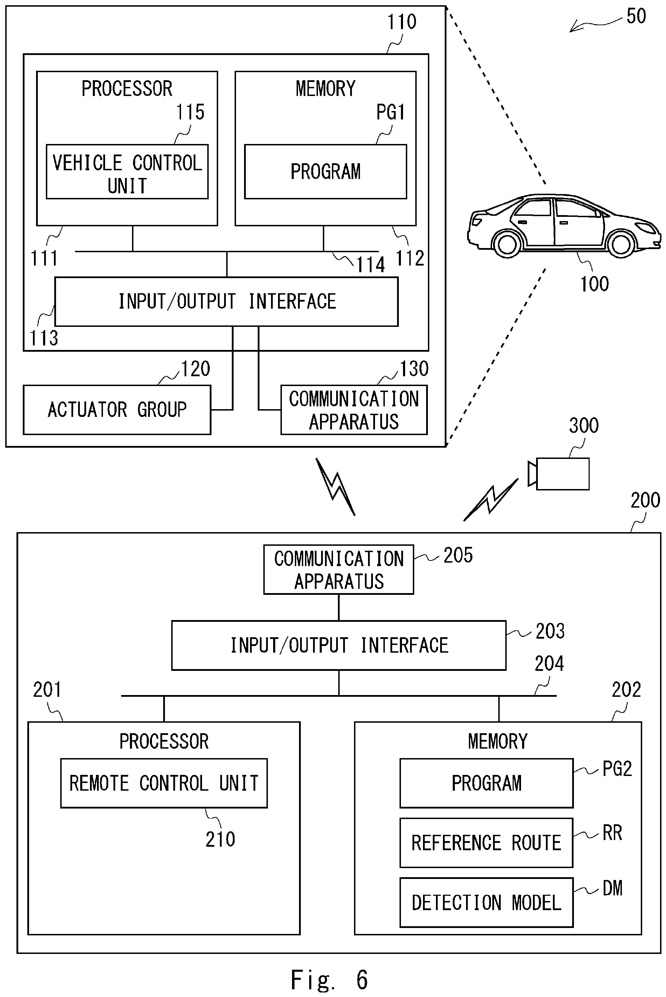

Fig. 6 is a block diagram showing a configuration of the system 50. The vehicle 100 includes a vehicle control apparatus 110 for controlling various units of the vehicle 100, an actuator group 120 including at least one actuator driven under the control of the vehicle control apparatus 110, and a communication apparatus 130 for communicating with an external apparatus such as the server 200 through wireless communication. The actuator group 120 includes an actuator of a driving unit for accelerating the vehicle 100, an actuator of a steering unit for changing the traveling direction of the vehicle 100, and an actuator of a braking unit for decelerating the vehicle 100.

The vehicle control apparatus 110 is composed of a computer including a processor 111, a memory 112, an input/output interface 113, and an internal bus 114. The processor 111, the memory 112, and the input/output interface 113 are connected to each other through the internal bus 114 so that they can bidirectionally communicate with each other. The actuator group 120 and the communication apparatus 130 are connected to the input/output interface 113. The processor 111 implements various functions including the function as the vehicle control unit 115 by executing a program PG1 stored in the memory 112.

The vehicle control unit 115 drives the vehicle 100 by controlling the actuator group 120. The vehicle control unit 115 can drive the vehicle 100 by controlling the actuator group 120 by using a driving control signal received from the server 200. The driving control signal is a control signal for driving the vehicle 100. In this embodiment, the driving control signal includes an acceleration and a steering angle of the vehicle 100 as parameters. In other embodiments, the driving control signal may include a speed of the vehicle 100 as a parameter instead of or in addition to the acceleration of the vehicle 100.

The server 200 is composed of a computer including a processor 201, a memory 202, an input/output interface 203, and an internal bus 204. The processor 201, the memory 202, and the input/output interface 203 are connected through the internal bus 204 so that they can bidirectionally communicate with each other. A communication apparatus 205 for communicating with various apparatuses located outside the server 200 is connected to the input/output interface 203. The communication apparatus 205 can communicate with the vehicle 100 through wireless communication, and can communicate with each of the external sensors 300 through wired communication or wireless communication. The processor 201 implements various functions including the function as the remote-control unit 210 by executing a program PG2 stored in the memory 202.

The remote-control unit 210 acquires a detection result obtained by a sensor, generates a driving control signal for controlling the actuator group 120 of the vehicle 100 by using the detection result, and transmits the generated driving control signal to the vehicle 100. In this way, the remote-control unit 210 drives the vehicle 100 by remote control. The remote-control unit 210 may generate and output, in addition to the driving control signal, control signals for controlling various auxiliary apparatuses provided in the vehicle 100 and actuators for operating various types of equipment such as wipers, power windows, and lamps. That is, the remote-control unit 210 may operate these various types of equipment and various auxiliary apparatuses by remote control.

The external sensor 300 is a sensor located outside the vehicle 100. The external sensor 300 in this embodiment is a sensor for capturing (e.g., finding and keeping track of) the vehicle 100 from outside the vehicle 100. The external sensor 300 includes a communication apparatus (not shown) and can communicate with other apparatuses such as the server 200 through wired communication or wireless communication.

Specifically, the external sensor 300 is formed by a camera (e.g., a still camera or a video camera). A camera, which functions as the external sensor 300, takes an image (e.g., a still image or a moving image) including (i.e., showing therein) the vehicle 100 and outputs the taken image as a detection result.

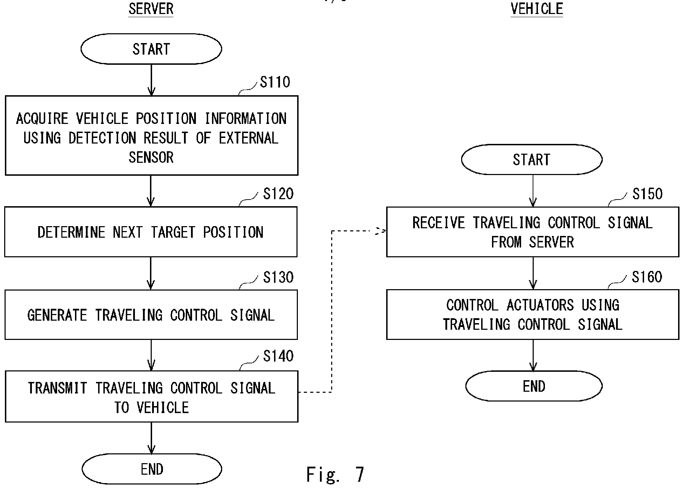

Fig. 7 shows a flowchart showing a procedure of processes for controlling the traveling of a vehicle 100 in a traveling control example. In the procedure of processes shown in Fig. 7, the processor 201 of the server 200 functions as the remote-control unit 210 by executing the program PG2. Further, the processor 111 of the vehicle 100 functions as the vehicle control unit 115 by executing the program PG1.

In a step S 110, the processor 201 of the server 200 acquires vehicle position information of the vehicle 100 by using a detection result output from the external sensor 300. The vehicle position information is position information based on which a driving control signal is generated. In this embodiment, the vehicle position information includes the position and orientation of the vehicle 100 in the global coordinate system GC of the factory FC. Specifically, in a step S110, the processor 201 acquires vehicle position information by using the photographed image acquired from the camera serving as the external sensor 300.

Specifically, in the step S110, the processor 201 acquires the position of the vehicle 100 by, for example, detecting the external shape of the vehicle 100 from the photographed image, calculating the coordinates of the positioning point of the vehicle 100 in the coordinate system of the photographed image, i.e., in the local coordinate system, and converting the calculated coordinates into coordinates in the global coordinate system GC. The external shape of the vehicle 100 included (i.e., shown) in the photographed image can be detected by, for example, inputting the photographed image into a detection model DM using artificial intelligence. The detection model DM is prepared, for example, in the system 50 or outside the system 50, and stored in the memory 202 of the server 200 in advance. Examples of the detection model DM include a trained machine-learning model that has been trained to perform either semantic segmentation or instance segmentation. As this machine-learning model, for example, a convolutional neural network (hereinafter also referred to as a CNN) trained through supervised learning using a learning data set can be used. The learning data set includes, for example, a plurality of training images each including the vehicle 100 and labels each indicating whether a respective area in the training image is an area indicating the vehicle 100 or an area that does not indicate a mobile object. When the CNN is trained, it is preferred that parameters of the CNN are updated by backpropagation (error back-propagation method) so that errors between output results by the detection model DM and labels are reduced. Further, the processor 201 can acquire the orientation of the vehicle 100 by, for example, estimating it based on the orientation of the moving vector of the vehicle 100 calculated from changes in the positions of the feature points of the vehicle 100 between frames of the photographed images by using an optical flow method.

In a step S120, the processor 201 of the server 200 determines a target position to which the vehicle 100 should go next. In this embodiment, the target position is represented by X, Y and Z-coordinates in the global coordinate system GC. In the memory 202 of the server 200, a reference route RR, which is a route along which the vehicle 100 should travel, is stored in advance. A route is represented by a node indicating a starting point, a node(s) indicating a passing point(s), a node indicating a destination, and links connecting these nodes with one another. The processor 201 determines a target position to which the vehicle 100 should go next by using the vehicle position information and the reference route RR. The processor 201 determines the target position of the vehicle 100 ahead of the current position thereof on the reference route RR.

In a step S130, the processor 201 of the server 200 generates a driving control signal for driving the vehicle 100 toward the determined target position. The processor 201 calculates the traveling speed of the vehicle 100 based on the changes in the position of the vehicle 100, and compares the calculated traveling speed with the target speed. When the traveling speed is lower than the target speed, the processor 201 determines, as a whole, the acceleration of the vehicle 100 so that the vehicle 100 accelerates, whereas when the traveling speed is higher than the target speed, the processor 201 determines the acceleration so that the vehicle 100 decelerates. Further, when the vehicle 100 is positioned on the reference route RR, the processor 201 determines the steering angle and the acceleration of the vehicle 100 so that the vehicle 100 does not deviate from the reference route RR, whereas when the vehicle 100 is not positioned on the reference route RR, i.e., the vehicle 100 has deviated from the reference route RR, the processor 201 determines the steering angle and the acceleration so that the vehicle 100 returns to the reference route RR.

In a step S140, the processor 201 of the server 200 transmits the generated driving control signal to the vehicle 100. The processor 201 repeats the acquisition of the position of the vehicle 100, the determination of a target position, the generation of a driving control signal, the transmission of the driving control signal, and the like in a predetermined cycle.

In a step S150, the processor 111 of the vehicle 100 receives the driving control signal transmitted from the server 200. In a step S160, the processor 111 of the vehicle 100 controls the actuator group 120 by using the received driving control signal, and thereby drives the vehicle 100 so as to travel at the acceleration and the steering angle indicated by the driving control signal. The processor 111 repeats the reception of a driving control signal and the control of the actuator group 120 at a predetermined cycle. According to the system 50 in this example, it is possible to drive the vehicle 100 by remote control, and thereby move the vehicle 100 without using conveyance equipment such as a crane or a conveyor.

### <B: Traveling Control Example 2>

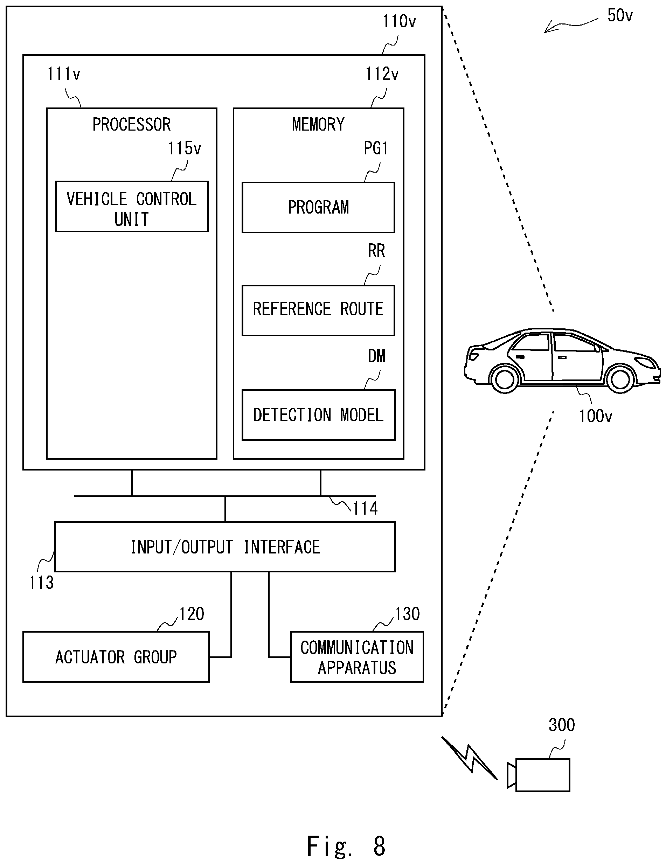

Fig. 8 is an explanatory diagram showing a schematic configuration of a system 50v in Traveling Control Example 2. This example differs from Traveling Control Example 1 because the system 50v does not includes the server 200. Further, a vehicle 100v in the configuration can travel by autonomous control performed by the vehicle 100v itself. The rest of the configuration is the same as that described above unless otherwise specified.

In this example, a processor 111v of a vehicle control apparatus 110v functions as a vehicle control unit 115v by executing a program PG1 stored in a memory 112v. The vehicle control unit 115v acquires an output result obtained by a sensor, generates a driving control signal by using the output result, and outputs the generated driving control signal and thereby operates the actuator group 120. By doing so, the vehicle control unit 115v can make the vehicle 100v travel by autonomous control performed by the vehicle 100 itself. In this example, in addition to the program PG1, a detection model DM and a reference route RR are stored in the memory 112v in advance.

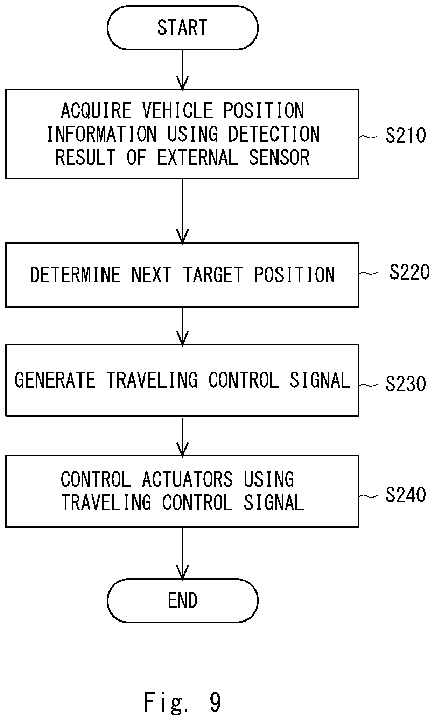

Fig. 9 shows a flowchart showing a procedure of processes for controlling the traveling of the vehicle 100v in Traveling Control Example 2. In the processing procedure shown in Fig. 9, the processor 111v of the vehicle 100v functions as the vehicle control unit 115v by executing the program PG1.

In a step S210, the processor 111v of the vehicle control apparatus 110v acquires vehicle position information by using a detection result output from a camera which is an external sensor 300. In a step S220, the processor 111v determines a target position to which the vehicle 100v should go next. In a step S230, the processor 111v generates a driving control signal for making the vehicle 100v travel toward the determined target position. In a step S240, the processor 111v controls the actuator group 120 by using the generated driving control signal, and thereby makes the vehicle 100v travel according to parameters indicated by the driving control signal. The processor 111v repeats the acquisition of vehicle position information, the determination of a target position, the generation of a driving control signal, and the control of actuators in a predetermined cycle. According to the system 50v in this example, it is possible to make the vehicle 100v travel by autonomous control performed by the vehicle 100v itself without having the server 200 remotely control the vehicle 100v.

### YY: Other Traveling Control Examples

(YY1) In the above-described examples, the external sensor 300 is a camera. However, the external sensor 300 may not be a camera and may be, for example, LiDAR (Light Detection And Ranging). In this case, the detection result output from the external sensor 300 may be 3D (three-dimensional) point cloud data representing the vehicle 100. In this case, the server 200 and the vehicle 100 may acquire vehicle position information by template matching between the 3D point cloud data, which is the detection result, and reference point cloud data prepared in advance.

(YY2) In Traveling Control Example 1, a series of processes from the acquisition of vehicle position information to the generation of a driving control signal are performed by the server 200. However, at least some of the processes from the acquisition of vehicle position information to the generation of a driving control signal may be performed by the vehicle 100. For example, the below-shown Embodiments (1) to (3) may be adopted.
(1) The server 200 may acquire vehicle position information, determine a target position to which the vehicle 100 should go next, and generate a route from the current position of the vehicle 100 indicated by the acquired vehicle position information to the target position. The server 200 may generate a route to a target position which is located between the current position and the destination, or generate a route to the destination. The server 200 may transmit the generated route to the vehicle 100. The vehicle 100 may generate a driving control signal so as to travel along the route received from the server 200, and control the actuator group 120 by using the generated driving control signal.
(2) The server 200 may acquire vehicle position information and transmit the acquired vehicle position information to the vehicle 100. The vehicle 100 may determine a target position to which the vehicle 100 should go next, generate a route from the current position of the vehicle 100 indicated by the received vehicle position information to the target position, generate a driving control signal so as to travel along the generated route, and control the actuator group 120 by using the generated driving control signal.
(3) In the above-described Embodiments (1) and (2), the vehicle 100 may be equipped with an internal sensor, and a detection result output from the internal sensor may be used for at least either the generation of a route or the generation of a driving control signal. The internal sensor is a sensor provided in the vehicle 100. Examples of internal sensors may include a sensor for detecting the motion state of the vehicle 100, a sensor for detecting the operation state of each unit of the vehicle 100, and a sensor for detecting the environment around the vehicle 100. Specifically, examples of internal sensors include a camera, LiDAR, a millimeter-wave radar, an ultrasonic sensor, a GPS sensor, an acceleration sensor, and a gyro sensor. For example, in the above-described Embodiment (1), the server 200 may acquire a detection result obtained by the internal sensor, and when generating a route, take the detection result of the internal sensor into consideration in the generation of the route. In the above-described Embodiment (1), the vehicle 100 may acquire a detection result obtained by the internal sensor, and when generating a driving control signal, take the detection result of the internal sensor into consideration in the generation of the driving control signal. In the above-described Embodiment (2), the vehicle 100 may acquire a detection result obtained by the internal sensor, and when generating a route, take the detection result of the internal sensor into consideration in the generation of the route. In the above-described Embodiment (2), the vehicle 100 may acquire a detection result obtained by the internal sensor, and when generating a driving control signal, take the detection result of the internal sensor into consideration in the generation of the driving control signal.

(YY3) In Traveling Control Example 2, the vehicle 100v may be equipped with an internal sensor, and a detection result output from the internal sensor may be used for at least either the generation of a route or the generation of a driving control signal. For example, the vehicle 100v may acquire a detection result obtained by the internal sensor, and when generating a route, take the detection result of the internal sensor into consideration in the generation of the route. The vehicle 100v may acquire a detection result obtained by the internal sensor, and when generating a driving control signal, take the detection result of the internal sensor into consideration in the generation of the driving control signal.

(YY4) In Traveling Control Example 2, the vehicle 100v acquires vehicle position information by using a detection result obtained by an external sensor 300. However, the vehicle 100v may be equipped with an internal sensor, and the vehicle 100v may acquire vehicle position information by using the detection result of the internal sensor, determine a target position to which the vehicle 100v should go next, generate a route from the current position of the vehicle 100v indicated by the acquired vehicle position information to the target position, generate a driving control signal for traveling along the generated route, and control the actuator group 120 by using the generated driving control signal. In this case, the vehicle 100v can travel without using the detection result of the external sensor 300 at all. Note that the vehicle 100v may acquire a target arrival time and traffic congestion information from outside the vehicle 100v and take the target arrival time and traffic congestion information into consideration in at least either the generation of a route or the generation of a driving control signal. Further, all the functions of the system 50v may be provided in the vehicle 100v. That is, the whole processing implemented by the system 50v according to the present disclosure may be implemented by the vehicle 100v alone.

(YY5) In Traveling Control Example 1, the server 200 automatically generates a driving control signal to be transmitted to the vehicle 100. However, the server 200 may generate a driving control signal to be transmitted to the vehicle 100 according to an operation performed by an operator who is present outside the vehicle 100. For example, an operator present outside the vehicle 100 may operate a controlling apparatus including a display for displaying a photographed image output from an external sensor 300, a steering wheel, an accelerator pedal, and a brake pedal for remotely controlling the vehicle 100, and a communication apparatus for communicating with the server 200 through wired communication or wireless communication. Then, the server 200 may generate a driving control signal according to operations performed on the controlling apparatus.

(YY6) In each of the above-described traveling control examples, it is sufficient if the vehicle 100 has a configuration capable of moving the vehicle 100 by an unattended operation. For example, the vehicle 100 may be in the form of a platform including the below-described configuration. Specifically, it is sufficient if the vehicle 100 include at least a vehicle control apparatus 110 and an actuator group 120 in order to perform three functions of "running", "turning", and "stopping" by an unattended operation. In the case where the vehicle 100 acquires information from the outside the vehicle 100 in order to perform an unattended operation, it is sufficient if the vehicle 100 further include a communication apparatus 130. That is, the vehicle 100 capable of moving by an unattended operation may not include at least some of interior components such as a driver's seat and a dashboard, may not include at least some of exterior components such as a bumper and a fender, and may not include a body shell. In this case, the remaining components such as a body shell may be attached to the vehicle 100 until the vehicle 100 is shipped from the factory FC. Alternatively, the vehicle 100 may be shipped from the factory FC without the remaining components such as a body shell, and then these remaining components such as a body shell may be attached to the vehicle 100 after the shipment. These components may be attached from arbitrary directions such as from above, from below, from front, from rear, from the right side, or from the left side of the vehicle 100. Further, they may be attached from the same direction or from different directions. Note that in the case of being formed as a platform, its position may be determined in the same manner as the position of the vehicle 100 is determined in the first embodiment.

(YY7) The vehicle 100 may be manufactured by combining a plurality of modules with each other. The module means a unit composed of a plurality of components that are assembled according to the place in the vehicle 100 at which the module is used and/or according to the function in the vehicle 100. For example, the platform of the vehicle 100 may be manufactured by combining a front module constituting the front part of the platform, a center module constituting the central part of the platform, and a rear module constituting the rear part of the platform with each other. Note that the number of modules constituting the platform is not limited to three, but may be two or less, or four or more. Further, in addition to or instead of the components constituting the platform, components constituting a part of the vehicle 100 other than the platform may be assembled into a module. Further, they include various modules including optional exterior components such as a bumper and a grill, and optional interior components such as a seat and a console. Further, what is manufactured is not limited to the vehicle 100. That is, any type of mobile object may be manufactured by combining a plurality of modules with each other. Such modules may be manufactured, for example, by joining a plurality of components by welding or by using fixtures, or may be manufactured by integrally molding at least some of the components constituting the module into one component by casting. A molding method for integrally molding one component, particularly a relatively large component, may also be called giga-casting or mega-casting. For example, the aforementioned front module, the center module, and the rear module may be manufactured by giga-casting.

(YY8) The conveyance of a vehicle 100 that is carried out by making the vehicle 100 travel by an unattended operation is also called "self-propelled conveyance". Further, the configuration for carrying out self-propelled conveyance is also called a "vehicle remote control autonomous traveling conveyance system". Further, the production method for producing vehicles 100 by using self-propelled conveyance is also called "self-propelled production". In the self-propelled production, for example, at least some of the conveyance of vehicles 100 is carried out by self-propelled conveyance in the factory FC in which vehicles 100 are manufactured.

(YY9) In each of the above-described traveling control examples, some or all of the functions and processes implemented by software may be implemented by hardware. Further, some or all of the functions and processes implemented by hardware may be implemented by software. As the hardware for implementing various functions in each of the above-described embodiments, various circuits such as integrated circuits and/or discrete circuits may be used.

Further, some or all of the processes performed in the above-described external sensor 300, the vehicle 100, the server 200, the external sensor 300, the power feeding robot 600, and the like can be implemented in the form of a computer program. Such a program can be stored and provided to the computer by using any type of non-transitory computer readable media. Non-temporary computer readable media include various types of substantial recording media. Examples of the non-transitory computer readable media include a magnetic recording medium (such as a flexible disk, a magnetic tape, and a hard disk drive), a magneto-optic recording medium (such as a magneto-optic disk), a CD-ROM (Read Only Memory), a CD-R, a CD-R/W, and a semiconductor memory (such as a mask ROM, a PROM (Programmable ROM), an EPROM (Erasable PROM), a flash ROM, and a RAM (Random Access Memory)). Further, the program may be supplied to the computer by various types of temporary computer readable media. Examples of transitory computer readable media include electric signals, optical signals, and electromagnetic waves. Temporary computer readable media can provide programs to computers through wired or wireless communication channels such as wires and optical fibers.

Note that the present invention is not limited to the above-described example embodiments, and they can be modified as appropriate without departing from the scope and spirit of the invention.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A route determination apparatus comprising:
an acquisition unit configured to acquire information about presence/absence of a power feeding port of a first vehicle (100a) including a power feeding port and that of a second vehicle (100b) including no power feeding port;
a route determination unit (233) configured to determine a route along which the first vehicle (100a) or the second vehicle (100b) travels by itself or is towed based on the information; and
an instruction unit configured to provide an instruction to the first and second vehicles.

2. The route determination apparatus according to claim 1, wherein the route of the first vehicle (100a) includes a power feeding apparatus (710) on the route.

3. The route determination apparatus according to claim 1 or 2, wherein the route of the second vehicle (100b) includes no power feeding apparatus (710) on the route.

4. The route determination apparatus according to claim 1 or 2, further comprising a transmission unit configured to transmit the determined route to the first vehicle (100a), the second vehicle (100b), a vehicle towing the first vehicle (100a), or a vehicle towing the second vehicle (100b).

5. The route determination apparatus according to claim 1 or 2, further comprising:
a control instruction creation unit (234) configured to create a control instruction value for the first vehicle (100a), the second vehicle (100b), a vehicle towing the first vehicle (100a), or a vehicle towing the second vehicle (100b) based on the determined route; and
a transmitting unit configured to transmit the control instruction value to the first vehicle (100a), the second vehicle (100b), the vehicle towing the first vehicle (100a), or the vehicle towing the second vehicle (10b0) based on the determined route.

6. The route determination apparatus according to claim 1 or 2, wherein the instruction unit instructs the first and second vehicles at a vehicle manufacturing plant or at a port where vehicles are loaded onto a ship.

7. The route determination apparatus according to claim 1, further comprising an SOC (State of Charge) information acquisition unit configured to acquire SOC information of the first vehicle (100a), wherein
the route determination unit (233) determines a route based on the information and the SOC information.

8. The route determination apparatus according to claim 7, wherein when the SOC of the first vehicle (100a) is equal to or lower than a predetermined value, the route of the first vehicle (100a) is a route including a power feeding apparatus (710) thereon.

9. The route determination apparatus according to claim 7 or 8, wherein when at least one of a condition that the vehicle is the second vehicle (100b) and a condition that the vehicle is the first vehicle (100a) of which the SOC is equal to or higher than a predetermined value is satisfied, the route of the first vehicle (100a) or the second vehicle (100b) is a rout including no power feeding apparatus thereon.

10. A route determination method comprising:
acquiring information about presence/absence of a power feeding port of a first vehicle (100a) including a power feeding port and that of a second vehicle (100b) including no power feeding port;
determining a route along which the first vehicle (100a) or the second vehicle (100b) travels by itself or is towed based on the information; and
providing an instruction to the first and second vehicles.

11. A vehicle configured to tow a first vehicle along a route determined by the route determination apparatus according to claim 1.
